**Europäisches Patentamt**

**European Patent Office**

**Office européen des brevets**

(11) Publication number: **0 146 177**
**B1**

## (12) EUROPEAN PATENT SPECIFICATION

(45) Date of publication of patent specification: **16.09.87**

(21) Application number: **84201781.6**

(22) Date of filing: **03.12.84**

(51) Int. Cl.⁴: **G 02 B 3/04**

(54) Single collimator lens having one aspherical surface.

(30) Priority: **07.12.83 NL 8304212**

(43) Date of publication of application:
**26.06.85 Bulletin 85/26**

(45) Publication of the grant of the patent:
**16.09.87 Bulletin 87/38**

(84) Designated Contracting States:
**AT BE CH DE FR GB IT LI SE**

(56) References cited:
**DE-A-1 278 131**
**FR-A-2 271 585**
**FR-A-2 352 313**
**FR-A-2 509 478**
**GB-A-2 087 591**
**GB-A-2 109 583**
**US-A-2 530 397**

(73) Proprietor: **N.V. Philips' Gloeilampenfabrieken**
**Groenewoudseweg 1**
**NL-5621 BA Eindhoven (NL)**

(72) Inventor: **Smid, Albert**
**c/o INT. OCTROOIBUREAU B.V. Prof. Holstlaan 6**
**NL-5656 AA Eindhoven (NL)**

(74) Representative: **Cobben, Louis Marie Hubert**
**et al**
**INTERNATIONAAL OCTROOIBUREAU B.V. Prof.**
**Holstlaan 6**
**NL-5656 AA Eindhoven (NL)**

Courier Press, Leamington Spa, England.

**Description**

The invention relates to a single collimator lens having one aspherical surface. The invention also relates to an optical system producing a collimated radiation beam and to an optical scanning unit provided with such an optical system.

The Applicant's Netherlands Patent Application No. 81.03323 (FR—A—2509478), which has been laid open to public inspection, discloses a single lens having one aspherical surface, briefly referred to as a mono-aspherical lens. This lens is suitable for use as an objective lens in an optical scanning unit by means of which an information surface in an optical record carrier is read or recorded. This information surface must be scanned with a minute radiation spot whose diameter is of the order of 1 μm, which means that the lens must have a comparatively large numerical aperture. Further, the objective lens must have a comparatively large diffraction-limited field, to allow a sharp radiation spot to be formed in points which are radially offset from the optical axis of the objective, which is necessary to allow minor deviations in the position of the radiation spot relative to a track pattern in the information surface to be corrected. The requirements of a comparatively large numerical aperture (N.A. larger then 0.25) and a large diffraction-limited field can be met by a mono-aspherical lens whose second surface is spherical and whose first surface is highly aspherical and has a shape which is defined by a series expansion with a multitude of terms.

It is the object of the present invention to provide a mono-aspherical lens whose geometry is substantially simpler, which is easier to manufacture and which is yet extremely suitable for the specific function of collimating a diverging radiation beam produced by a radiation source such as a diode laser.

The mono-aspherical collimator lens in accordance with the invention is characterized in that the second surface of the lens, which lens has a numerical aperture smaller than 0.25 and a focal length between approximately 16 mm and approximately 24 mm, is plane and the aspherical surface is defined by the expression:

$$Z = E_2 R^2 + E_4 R^4 + E_6 R^6,$$

where R in mm, is the distance from a point on the aspherical surface to the optical axis of the lens and Z in mm, is the distance between the projection of said point on the optical axis and the point of intersection of the optical axis and the aspherical surface, the coefficients $E_2$, $E_4$ and $E_6$, which are functions of the refractive index n and the focal length f in mm, being given by:

$$E_2 = \frac{1}{40.(n-1)} \cdot \left(\frac{f}{20}\right)^{-1}$$

$$E_4 = \left\{ (2.710893 - 3.626513.n + 1.120858.n^2).10^{-4} + E_2^3 \right\} \left(\frac{f}{20}\right)^{-3}$$

$$E_6 = \left\{ (2.825115 - 3.1865364.n + 0.8904979.n^2).10^{-6} + E_2^5 \right\} \left(\frac{f}{20}\right)^{-5}$$

The invention is based on the recognition of the fact that a collimator lens with a small numerical aperture may comprise a single element having one plane surface and an aspherical surface of comparatively simple shape, which may be defined by a series expansion with even terms, which series may be interrupted already after the third term. The wavefront aberration caused by the omission of the higher-order terms is well below the Maréchal criterion.

An optical scanning unit in which the collimator lens in accordance with the invention is employed may comprise a radiation source, for example a diode laser, which emits an asymmetrical beam, *i.e.* a beam whose aperture angle in one plane is greater than that in a second plane perpendicular to the first plane. Moreover, this beam is astigmatic, which means that a lens does not focus this beam in one focal point but in two focal lines which are perpendicularly and axially offset from each other. In an optical scanning unit use is made of a collimator lens with a sufficiently small numerical aperture, for example N.A. = 0.11. In this way the diode laser beam can be made more symmetrical at the expense of some intensity. The smaller depth of field of a lens with a smaller numerical aperture enables the astigmatism to be reduced to an acceptable level.

In comparison with a mono-aspherical lens with one spherical surface a mono-aspherical lens having a plane surface, briefly referred to as plano-aspherical lens has the advantage that a plane surface is simpler to manufacture than a spherical surface and that the aspherical surface of the plano-aspherical lens is less

2

likely to become off-centred. During the manufacture of the last-mentioned lens only an alignment of the angular position is required.

It is to be noted that a single lens having one aspherical and one plane surface has been described previously, for example in United States Patent Specification No. 2,530,397. The lens described therein has a plane front face and a rear face in the form of a second-order generated surface. This lens must be combined with an aperture at some distance from the lens body. The rear face is made aspherical in order to render the lens, which is required to have a large field, non-astigmatic. The lens in accordance with the invention has an aspherical surface in order to provide a correction for spherical aberration on and around the axis. The lens in accordance with United States Patent Specification no. 2,530,397 therefore has a different aspherical profile than the lens in accordance with the present invention.

In the description of German Patent Application No. 1,278,131, which claims a lens having one sphericl and one aspherical surface, it is stated that in the case of the lens having one plane surface the spherical aberration can be eliminated by making the other surface aspherical, but it is also stated that then the sine condition can no longer be satisfied, so that in practice a spherical surface will be chosen to satisfy the sine condition. The lens in accordance with the invention is based on the recognition of the fact that for the present use and the corresponding specific values for the numerical aperture and the focal length the sine condition need not be met.

Preferably, a collimator lens in accordance with the invention is characterized further in that the lens comprises a glass planoconvex body whose convex surface is provided with a layer of a transparent plastics with an aspherical outer profile, the refractive index of the plastics layer being substantially equal to that of the glass body. Substantial progress in the field of so-called replica techniques enables this lens to be manufactured easily and cheaply in large quantities. Once a mould is available whose profile is the negative of the aspherical outer profile to be formed. Such a mould may be pressed into a layer of a sufficiently softened plastics deposited on a glass preform, after which the plastics is allowed to cure and the mould may be removed from the preform with the plastics.

Preferably, the plastics is a substance which cures under the influence of ultraviolet radiation.

A second aspect of the invention concerns an optical system producing a collimated radiation beam. Such a system is described in the Applicants's Netherlands Patent Application No. 80.06061 (GB—A—2087591). This system comprises a tubular holder, a semiconductor diode laser mounted in the holder, and a collimator lens system which is also arranged in the holder. This lens system comprises either two spherical lenses or one aspherical lens. An optical system, modified in accordance with the invention, for producing a collimated radiation beam is characterized in that the collimator lens system comprises a single plano-aspherical collimator lens as described in the foregoing, whose plane surface is directed towards the diode laser.

The optical system which produces a collimated radiation beam may form part of an optical scanning unit for scanning an information surface in a record carrier, which unit further comprises an objective system focussing the collimated radiation beam so as to form a diffraction-limited radiation spot on the information surface.

The invention will now be described in more detail, by way of example, with reference to the drawings. In the drawings:

Fig. 1 is a cross-sectional view of a single collimator lens in accordance with the invention,

Figs. 2 and 3 show single collimator lenses in accordance with the invention comprising a glass body and a plastics layer,

Fig. 4 shows an optical system producing a collimated radiation beam, and Fig. 5 shows an optical scanning unit.

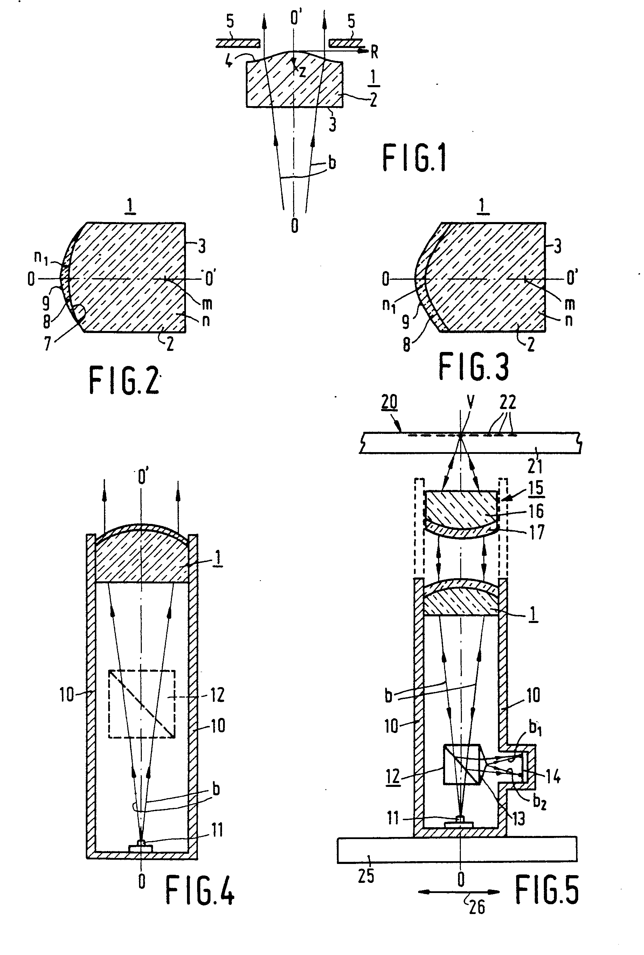

Fig. 1 shows a plano-aspherical collimator lens 1 in accordance with the invention, which lens collimates the diverging beam b. The beam b is represented by the marginal rays, *i.e.* the rays which just pass the edge of the pupil 5. The optical axis of the lens is designated OO'. The rays which are incident on the plane surface 3 of the lens are refracted towards the optical axis, then they traverse the lens body 2, and finally they are further refracted towards the axis by the aspherical surface 4 to emerge as parallel rays.

For the present use the collimator lens need have only a small numerical aperture and should have a high imaging quality only in an area which is small relative to the focal length. These requirements can be met by the plano-aspherical lens shown in Fig. 1. The advantage of this lens is that the optical quality and the focal length are determined wholly by the aspherical surface. This is essential for the manufacture of the lens. Only one "difficult" surface has to be formed, whilst the plane surface may be employed as a reference surface. Preferably care is taken that the axis of symmetry of the rotationally symmetrical aspherical surface extends perpendicularly to the plane surface. This axis of symmetry then also constitutes the axis of the lens. Thus, no centring problems occur as in the case of a lens having a one aspherical and one spherical surface.

Surprisingly, it has been found that the aspherical surface of the plano-aspherical lens with a numerical aperture smaller than 0.25 can be defined entirely by

$$Z = \sum_{i=1}^{4} E_{2i} R^{2i}$$

**0 146 177**

*i.e.* by a series expansion which is interrupted already after the fourth term. For known aspherical surfaces higher-order terms, for example up to and including the fourteenth term, must be included. If the lens material has a refractive index n larger than 1.65 the term $E_8R^8$ may also be dispensed with. $E_8R^8$ may also be omitted for a numerical aperture smaller than 0.20, regardless of the value of n.

For a plano-aspherical lens having a refractive index between approximately 1.65 and approximately 2, a numerical aperture smaller than 0.25, and a focal length of 20 mm $E_2$, $E_4$ and $E_6$ are given by:

$$E_2 = \frac{1}{40.(n-1)}$$

$$E_4 = (2.710893 - 3.626513 + 1.120858.n^2).10^{-4} + E_2^3$$

$$E_6 = (2.825115 - 3.1865364 + 0.8904979.n^2).10^{-6} + E_2^5$$

The lens may have a focal length of approximately 16 mm to approximately 24 mm. for focal lengths other than 20 mm the above values for $E_2$, $E_4$ and $E_6$ may simply be scaled accordingly, which means that the terms must be multiplied by

$$\left(\frac{f}{20}\right)^{-1}, \left(\frac{f}{20}\right)^{-3}, \text{ and } \left(\frac{f}{20}\right)^{-5}$$

respectively. This lens is designed for an axial thickness d, *i.e.* the thickness measured along the optical axis, of approximately 2.5 mm. A variation of the axial thickness only has a slight influence on the lens behaviour and only gives rise to a small variation of $E_4$. Therefore, the axial thickness may differ considerably from 2.5 mm.

The lens may be thought to comprise a plano-convex basic element defined by the term $E_2R^2$ on which an aspherical layer defined by $E_4R^4 + E_6R^6$ is formed.

As is shown in Fig. 1, the lens 1 may be made entirely of glass. Such a lens has satisfactory optical properties, but forming an aspherical surface on the glass lens is difficult and time consuming. A composite plano-aspherical lens as is shown in Figs. 2 and 3 is more suitable for mass production.

This lens *1* comprises a glass body 2 having a plane surface 3 and a spherical surface 7, which body can be manufactured easily using conventional methods, and a layer 8 on the surface 7, which layer is made of a transparent plastics with an aspherical outer profile 9. The plastics may be thermo-setting plastics but preferably it is a substance which is polymerizable under the influence of ultraviolet radiation. This plastics is deposited in a sufficiently soft condition on the glass body 2 after which a mould whose surface profile is the negative of the desired profile is pressed into the layer. Subsequently, the plastics is exposed and the mould as removed so that the lens is obtained without requiring any further operations.

The plastics layer 8 of the plano-aspherical lens as shown in Fig. 2 has a thickness which varies substantially, for example from 2 μm to 50 μm. For the replication of surface profiles in plastics it is technologically desirable that relative thickness differences in the plastics layer be minimized. In order to achieve this a part of the glass body may be replaced by a plastics portion, as is shown in Fig. 3, so that the overall thickness of the plastics layer increases, thereby reducing the relative thickness differences.

In the lens shown in Fig. 3 the thickness of the plastics layer is only a fraction of that of the glass body. As a result of this the optical quality of the lens is hardly affected by the plastics layer whose properties are less satisfactory than those of glass. The refractive index $n_1$ of the plastics layer should approximate the refractive index n of the glass as closely as possible.

Fig. 4 shows an optical system producing a collimated radiation beam, also referred to as a collimator light pen. This light pen comprises a tubular housing 10 accommodating a semiconductor diode laser 11, for example an AlGaAs diode laser, and a plano-aspherical collimator lens in accordance with the invention. When the collimator light pen is used in an apparatus for reading and/or recording a radiation-reflecting information surface in the record carrier a beam splitter prism 12 is arranged between the diode layer and the collimator lens in order to separate the beam reflected by the information surface from the beam emitted by the diode laser.

Fig. 5 schematically shows an optical scanning unit employing a plano-aspherical collimator lens. This scanning unit comprises a collimator light pen as shown in Fig. 4 and an objective lens system 15. A small part of the radial cross-section of a round disc-shaped record carrier is designated 20. the information structure, which in the present case is a radiation reflecting, is situated on the upper side of the record carrier substrate 21 and comprises a multitude of information areas, not shown, arranged along information tracks 22.

The information structure is scanned by a read beam b produced by a diode laser 11. The collimator lens forms the diverging beam into a parallel beam of such a cross-section that the pupil of the objective system 15 is filled correctly. This objective then forms a diffraction-limited radiation spot V on the information structure.

4

The beam is reflected by the information structure and, as the record carrier moves relative to the read beam, it is time-modulated in conformity with the information recorded in the information surface. By means of the prism 12 the modulated beam is separated from the beam emitted by the diode laser and is directed towards a radiation-sensitive detection system 14. This system supplies an electric signal which is modulated in conformity with the information stored in the record carrier.

In order to obtain a focusing-error signal which provides an indication of the magnitude and direction of a deviation between the plane of focusing of the objective system and the plane of the information structure, a roof prism 13 is arranged on the exit surface of the prism 12 and the detection system 14 comprises for example four detectors. The roof prism splits the reflected beam into two sub-beams $b_1$ and $b_2$ which form two radiation spots $V_1$ and $V_2$ in the plane of the detection system. Each of these radiation spots is associated with two detectors. For further details on the focusing-error detection system and the read-out of the information structure reference is made to Applicant's British Patent Application No. 2,107,483, which has been laid open to public inspection.

The objective system may comprise a plurality of lens elements. However, preferably this objective system is formed by a single plano-aspherical lens as described in the simultaneously filed EP—A—0146178. This objective may comprise a glass body 16 provided with a layer 17 of a plastics.

As is shown in Fig. 5 the objective 15 may be arranged externally of the light pen 10. Thus, this objective may be radially movable over small distances of the order of some tens of μm in order to eliminate tracking errors. However, it is alternatively possible to arrange the objective inside the holder 10 so as to be slightly movable in a radial direction, as is indicated by the broken lines in fig. 5. The scanning unit may be arranged on a slide 25 which is radially movable, as is indicted by the arrow 26, so that all information tracks 22 can be scanned sequentially.

## Claims

1. A single collimator lens having one aspherical surface, characterized in that the second surface of the lens, which lens has a numerical aperture smaller than 0.25 and a focal length between approximately 16 mm and approximately 24 mm, is plane and the aspherical surface is defined by the expression:

$$Z = E_2 R^2 + E_4 R^4 + E_6 R^6$$

where R in mm, is the distance from a point on the aspherical surface to the optical axis of the lens and Z in mm, is the distance between the projection of said point on the optical axis and the point of intersection of the optical axis and the aspherical surface, the coefficients $E_2$, $E_4$ and $E_6$, which are functions of the refractive index n and the focal length f in mm, being given by:

$$E_2 = \frac{1}{40.(n-1)} \cdot \left(\frac{f}{20}\right)^{-1}$$

$$E_4 = \left\{(2.710893 - 3.626513.n + 1.120858.n^2).10^{-4} + E_2^3\right\} \left(\frac{f}{20}\right)^{-3}$$

$$E_6 = \left\{(2.825115 - 3.1865364.n + 0.8904979.n^2).10^{-6} + E_2^5\right\} \left(\frac{f}{20}\right)^{-5}$$

2. A single collimator lens as claimed in Claim 1, characterized in that the lens comprises a glass plano convex body whose convex surface is provided with a laser of a transparent plastics with an aspherical outer profile, the refractive index of the plastics layer being substantially equal to that of the glass body.

3. A single collimator lens as claimed in Claim 2, characterized in that the plastics is a substance which cures under the influence of ultraviolet radiation.

4. An optical system producing a collimated radiation beam, which system comprises a tubular holder, a diode laser arranged in the holder, and a collimator lens system which is also arranged in the holder, characterized in that the collimator lens system comprises a single collimator lens as claimed in Claim 1 2 or 3, whose plane surface is directed towards the diode laser.

5. An optical scanning unit for scanning an information surface in a record carrier by means of a radiation spot, which unit comprises an objective system for forming a diffraction-limited radiation spot, characterized by an optical system as claimed in Claim 4.

# 0 146 177

**Patentansprüche**

1. Einfach-Kollomatorlinse mit einer asphärischen Oberfläche, dadurch gekennzeichnet, dass die zweite Oberfläche der Linse, die eine numerische Apertur kleiner als 0,25 und eine Brennweite zwischen etwa 16 mm und etwa 24 mm hat, flach ist und dass die asphärische Oberfläche durch nachstehende Gleichung beschrieben wird.

$$Z = E_2R^2 + E_4R^4 + E_6R^6$$

worin R in mm der Abstand eines Punkts auf der asphärischen Oberfläche zur optischen Achse der Linse und Z in mm der Abstand zwischen der Projektion auf der optischen Achse dieses Punktes und dem Schnittpunkt der optischen Achse und der asphärischen Oberfläche ist, und wobei die Koeffizienten $E_2$, $E_4$ und $E_6$, die Funktionen des Brechnungsindexes n und des Brennpunktabstands f in mm sind durch folgende Gleichungen gegeben werden:

$$E_2 = \frac{1}{40.(n-1)} \cdot \left(\frac{f}{20}\right)^{-1}$$

$$E_4 = \left\{ (2.710893 - 3.626513.n + 1.120858.n^2).10^{-4} + E_2^3 \right\} \left(\frac{f}{20}\right)^{-3}$$

$$E_6 = \left\{ (2.825115 - 3.1865364.n + 0.8904979.n^2).10^{-6} + E_2^5 \right\} \left(\frac{f}{20}\right)^{-5}$$

2. Einfach-Kollimatorlinse nach Anspruch 1, dadurch gekennzeichnet, dass die Linse aus einem plankonvexen Glaskörper besteht, auf dessen konvexer Oberfläche eine transparente Kunststoffschicht mit einem asphärischen Aussenprofil angebracht ist, wobei der Brechungsindex der Kunststoffschicht im wesentlichen gleich dem des Glaskörpers ist.

3. Einfach-Kollimatorlinse nach Anspruch 2, dadurch gekennzeichnet, dass der Kunststoff ein unter dem Einfluss ultravioletter Strahlung aushärtender Kunststoff ist.

4. Optisches System zum Erzeugen eines kollimierten Lichtstrahls, mit einer rohrförmigen Halterung, einem in der Halterung angebrachten Diodenlaser und einem gleichfalls in die Halterung aufgenommenen Kollimatorlinsensystem, dadurch gekennzeichnet, dass das Kollimatorlinsensystem eine Einfach-Kollimatorlinse nach Anspruch 1, 2 oder 3 enthält, deren ebene Oberfläche auf den Diodenlaser gerichtet ist.

5. Optische Abtasteinheit zum Abtasten einer Informationsfläche in einem Aufzeichnungsträger mit einem Strahlungsfleck, wobei die Einheit ein Objektivsystem zur Bildung eines beugungsbegrenzten Strahlungsflecks enthält, dadurch gekennzeichnet, dass sie ein optisches System nach Anspruch 4 enthält.

**Revendications**

1. Lentille collimatrice simple présentant une surface asphérique, caractérisée en ce que la deuxième surface de la lentille, qui présente une ouverture numérique inférieure à 0,25 et une distance focale comprise entre environ 16 mm et environ 24 mm, est plane et la surface asphérique est définie par l'expression:

$$Z = E_2R^2 + E_4R^4 + E_6R^6,$$

expression dans laquelle R est la distance en mm comprise entre un point de la surface asphérique et l'axe optique de la lentille et z est la distance en mm comprise entre la projection dudit point sur l'axe optique et le point d'intersection de l'axe optique et de la surfce asphérique, les coefficients $E_2$, $E_4$, et $E_6$, qui sont fonctions de l'indice de réfraction n et la distance focale f en mm étant donnés par

$$E_2 = \frac{1}{40.(n-1)} \cdot \left(\frac{f}{20}\right)^{-1}$$

$$E_4 = \left\{ (2.710893 - 3.626513.n + 1.120858.n^2).10^{-4} + E_2^3 \right\} \left(\frac{f}{20}\right)^{-3}$$

$$E_6 = \left\{ (2.825115 - 3.1865364.n + 0.8904979.n^2).10^{-6} + E_2^5 \right\} \left(\frac{f}{20}\right)^{-5}$$

2. Lentille collimatrice simple selon la revendiction 1, caractérisée en ce que la lentille comporte un corps planconvexe en verre, dont la surface convexe est munie d'une couche d'une matière synthétique transparente présentant un profil extérieur asphérique, l'indice de réfraction de la couche en matière synthétique étant pratiquement égal à celui du corps en verre.

3. Lentille collimatrice simple selon la revendication 2, caractérisée en ce que la matière synthétique est une substance qui durcit sous l'influence du rayonnement ultraviolet.

4. Système optique servant à délivrer un faisceau de rayonnement collimaté, comportant un support tubulaire, un laser à diode disposé dans le porteur et un système de lentilles collimatrices qui est également disposé dans le porteur, caractérisé en ce que le système de lentilles collimatrices comporte une lentille collimatrice simple comme définie par la revendication 1, 2 ou 3, dont la surface plane est dirigée vers le laser à diode.

5. Unité de balayage optique pour le balayage d'une surface d'information dans un porteur d'enregistrement à l'aide d'une tache de rayonnement, unité qui comporte un système objectif pour la formation d'une tache de rayonnement limitée par diffraction, caractérisée par un système optique selon la revendication 4.

FIG.1

FIG.2

FIG.3

FIG.4

FIG.5